(19) Europäisches Patentamt / European Patent Office / Office européen des brevets

(11) **EP 1 265 961 B2**

(12) **NEW EUROPEAN PATENT SPECIFICATION**

After opposition procedure

(45) Date of publication and mention
of the opposition decision:
**16.06.2010 Bulletin 2010/24**

(45) Mention of the grant of the patent:
**15.03.2006 Bulletin 2006/11**

(21) Application number: **01948073.0**

(22) Date of filing: **03.07.2001**

(51) Int Cl.:
***C08L 55/02*** (2006.01)     ***C08F 2/22*** (2006.01)
***C08F 36/00*** (2006.01)

(86) International application number:
**PCT/KR2001/001135**

(87) International publication number:
**WO 2002/002694 (10.01.2002 Gazette 2002/02)**

(54) **PROCESS FOR PREPARING THERMOPLASTIC RESIN HAVING SUPERIOR HEAT-STABILITY**

VERFAHREN ZUR HERSTELLUNG EINES THERMOPLASTISCHEN HARZES MIT HERAUSRAGENDER WÄRMESTABILITÄT

PROCEDE DE PREPARATION DE RESINE THERMOPLASTIQUE PRESENTANT UNE THERMOSTABILITE SUPERIEURE

(84) Designated Contracting States:
**DE FR GB IT**

(30) Priority: **03.07.2000 KR 2000037710**

(43) Date of publication of application:
**18.12.2002 Bulletin 2002/51**

(73) Proprietor: **LG Chemical Co. Ltd**
**Seoul 150-721 (KR)**

(72) Inventors:
• **YOO, Keun-Hoon**
**Yousung-ku,**
**Daejeon-city 305-333 (KR)**
• **KIM, Dong-Sung**
**Joong-ku,**
**Daejeon-city 301-130 (KR)**
• **LEE, Chan-Hong**
**Yousung-ku,**
**Daejeon-city 305-345 (KR)**

(74) Representative: **Goddar, Heinz J.**
**Forrester & Boehmert**
**Pettenkoferstrasse 20-22**
**80336 München (DE)**

(56) References cited:
| | |
|---|---|
| **EP-A- 0 144 081** | **EP-A- 0 188 814** |
| **EP-A- 0 255 889** | **EP-A- 0 391 178** |
| **EP-A- 0 668 320** | **EP-A- 0 721 895** |
| **EP-A- 0 784 078** | **WO-A-00/04067** |
| **DE-A- 2 420 358** | **DE-A- 3 334 338** |
| **DE-A- 3 708 913** | **JP-A- 57 149 348** |
| **JP-A- 61 126 157** | **JP-A- 63 235 350** |
| **KR-A- 99 052 367** | **US-A- 3 010 936** |
| **US-A- 4 659 790** | |

• **B. ELVERS ET AL.: 'Ullmann's Encyclopedia of Industrial Chemistry', vol. A21, 1992, VCH VERLAGSGESELLSCHAFT MBH, WEINHEIM, GERMANY page 633-659**
• **'Handbook of Thermoplastics', 1997 article MCO CHANG ET AL.: 'Acrylonitrile-Butadiene-Styrene (ABS) Polymers', page 135-159**

EP 1 265 961 B2

**Description**

**BACKGROUND OF THE INVENTION**

**(a) Field of the Invention**

The present invention relates to a process for preparing a heat-resistant thermoplastic resin, more particularly to a process for preparing a heat-resistant thermoplastic resin having superior heat-stability prepared by mixing a graft ABS polymer and a heat-resistant copolymer.

**(b) Description of the Related Art**

Recently, in order to produce automobile having a lightweight and electric goods requiring the heat resistance akin to that of an electric rice cooker, a microwave oven etc., research has developed a heat resistant in acrylonitrile-butadiene-styrene (ABS) resin having superior impact resistance, chemical resistance, and processability etc.

The method for preparing the ABS resin having a heat resistant discloses preparation by mixing copolymer having a superior heat resistant with the graft ABS polymer. The methods for preparing the ABS resin discloses the substitution of a partition or total amount of styrene used in the preparation of a heat resistant copolymer for mixing by $\alpha$-methyl styrene having a good heat-resistant (U.S. Patent Nos. 3,010,936 and 4,659,790), the method for preparing a heat-resistant ABS resin comprising maleimide compound (Japanese Patent Laid-open publication Nos. sho 58-206657, sho 63-162708, sho 63-235350, and U.S. Patent No. 4,757,109), the method mixing polycarbonate resin, and the method charging inorganic material etc.

However, the method using maleimide compound to give heat resistant and the method mixing with polycarbonate resin has the problem of reducing processability and is not economical due to expensive cost. The method charging inorganic material has a defect in that the impact strength is suddenly reduced. Therefore, the method for preparing ABS resin is widely used method where $\alpha$-methyl styrene copolymer is prepared by emulsion polymerization, and then the copolymer uses by mixing in case of the preparation of the resin. Although the method is economical and there is impact resistance, a gas occurs in large and glossy property falls during the processing of the resin due to the reaction property having a slow and thermal stability having a lack according to the characteristic of emulsion polymerization of $\alpha$-methyl styrene compound.

EP 0 255 889 A2 discloses heat-resistant thermoplastic resin composition.

**SUMMARY OF THE INVENTION**

It is an object of the present invention to provide a method for a preparing heat-resistant thermoplastic resin having an excellent thermal stability, impact resistance, and processability.

In order to achieve the object, the present invention provides a method for preparing a heat-resistant thermoplastic resin composition having an excellent heat stability comprising the steps of claim 1. Preferred embodiments are subject of the sub-claims.

**DETAILED DESCRIPTION OF THE PREFERRED EMBODIMENTS**

The present invention is described in detail as follows.

The present invention provides a heat-resistant thermoplastic resin having superior impact resistance and processability, particularly having an excellent thermal stability, which is that which the graft ABS polymer having a superior thermal stability and impact resistance prepares through emulsion polymerization by optimizing particle size and gel content of the rubber latex, and by controlling the graft ratio of the polymer, and that which a heat-resistant copolymer having superior thermal stability and processability prepares through controlling the molecular chain structure by mass polymerization, and then the ABS polymer and copolymer mixes.

The present invention is described in detail according to the preparation step as follows.

The graft ABS polymer used in mixing material of the present invention is prepared through graft copolymerization by emulsion polymerization of the conjugated diene rubber latex, aromatic vinyl compound and vinyl cyanide compound.

(Preparation of the graft ABS polymer)

The particle size and gel content of the conjugated diene rubber latex used in the preparation of the graft ABS polymer has a very large influence on the impact strength and processability of resin. Generally, as the particle size of rubber latex becomes small, the impact resistance and processability reduces, and as the particle size becomes large, the impact resistance improves. Also, as the gel content becomes low, polymerization occurs due to the swelling of monomers on the inside of the rubber latex, and thus as the apparent particle size becomes larger, the impact strength improves.

When preparing the graft ABS polymer, the graft ratio largely affects the property of the polymer. Thus, if the graft ratio is reduced, the un-grafted bare rubber latex exists, and thus thermal stability deteriorates. Also, as the gel content of the rubber latex is large, as the particle diameter is large, and as the graft ratio falls, the improvement of thermal stability is limited.

Therefore, the method for preparing the conjugated diene rubber latex having a suitable particle diameter and gel content is very important, and when the aromatic vinyl compound and vinyl cyanide compound is grafted in the conjugated diene rubber latex, the method for improving graft ratio is very important.

The graft ABS polymer prepares is as follows. The rubber latex having a small diameter is prepared, and the rubber latex having a large diameter is prepared by welding the rubber latex having a small diameter, and then the aromatic vinyl compound and vinyl cyanide compound is mixed in the rubber latex having a large diameter, and the graft ABS polymer is prepared through graft copolymerization by emulsion polymerization of the mixture.

The conjugated diene rubber latex is preferably aliphatic conjugated diene compound, or the mixture of the aliphatic conjugated diene compound and ethylene-based unsaturated monomer.

As to the first step, the method for preparing the rubber latex having a small diameter is described as follows.

The rubber latex having a small diameter is conjugated diene polymer, the particle diameter is preferably from 600 to 1500 Å, the gel content is preferably from 70 to 95 %, the swelling index is preferably from 12 to 30.

The rubber latex having a small diameter is prepared by adding in a lump 100 wt parts of conjugated diene monomer, 1 to 4 wt parts of the emulsifier, 0.1 to 0.6 wt parts of the polymerization initiator, 0.1 to 1.0 wt parts of the electrolyte, 0.1 to 0.5 wt parts of the molecular weight controlling agent, 90 to 130 wt parts of the ion exchange water in reactor, and by reacting for 5 to 15 hrs at 55 to 70 °C.

The emulsifier is alkyl aryl sulfonate, alkalimetal alkyl sulfate, sulfonated alkyl ester, soap of fatty acid, alkali salts of rosinate etc., which can be used alone or as a mixture of more than two kinds.

The polymerization initiator that can be used is aqueous persulfate or peroxycompound, and oxidation-reduction system compound also can be used. More particularly, the polymerization initiator of aqueous persulfate of sodium or potassium persulfate etc., a fat-soluble polymerization initiator such as cumene hydroperoxide, diisopropylbenzene hydroperoxide, azobis-isobutylnitrile, tert-butylhydroperoxide, paramethane hydroperoxide, benzoyl peroxide etc. can be used, which also can be used alone or as a mixture of more than two kinds.

The electrolyte can be used alone or as a mixture of more than two kinds of KCl, NaCl, $KHCO_3$, $NaHCO_3$, $K_2CO_3$, $Na_2CO_3$, $KHSO_3$, $NaNSO_3$, $K_4P_2O_7$, $K_3PO_4$, $Na_3PO_4$, $K_2HPO_4$, and $Na_2HPO_4$ etc.

The molecular weight controlling agent is preferably of mercaptan series.

The polymerization temperature for preparing latex having a small diameter is very important to control the gel content and swelling index of the rubber latex, wherein the selection of initiator should be considered.

As to the second step, the method for preparing the rubber latex having a large diameter .is described as follows.

The preparation of the rubber latex having a large diameter performs a welding process of the rubber latex having a small diameter. Generally, the particle diameter of the rubber latex having a large diameter produces a high impact property in the thermoplastic resin and is very important. In order to satisfy the property in the present invention, the required particle diameter is preferably from 2500 to 5000 Å.

The size of the particle is increased by slowly adding 2.5 to 4.5 wt parts of acetic acid for 1 hr to 100 wt parts of the rubber latex having a small diameter prepared as the above described method, that is to say, a particle diameter of 600 to 1500 Å, the gel content is 70 to 95%, and the swelling index s 12 to 30, and then the rubber latex having a large diameter is prepared through welding by stopping the agitation so as to have 2500 to 5000 Å of the particle diameter, 70 to 95% of the gel content, and 12 to 30 of the swelling index.

As to the third step, the grafting process is used. That is to say, the method is that the aromatic vinyl compound and vinyl cyanide compound is mixed by adding in the rubber latex having a large diameter, and then the graft ABS polymer is prepared by the graft copolymerization of the mixture through emulsion polymerization.

The grafting method is that 15 to 40 wt parts of aromatic vinyl compound, 5 to 20 wt parts of vinyl cyanide, 0.2 to 0.6 wt parts of emulsifier, 0.2 to 0.6 wt parts of the molecular weight controlling agent, 0.1 to 0.5 wt parts of the polymerization initiator etc. is graft copolymerizied by adding to 40 to 70 wt parts of the conjugated diene the rubber latex having a large diameter prepared by the above method. Wherein, the polymerization temperature is preferably 45 to 80 °C, and the polymerization time is preferably 3 to 5 hrs.

During the polymerization of the graft, the method of adding of each component can be used addition method in a lump, multi-step addition method, and continuous addition method, particularly, in order to improve the graft ratio and minimize the formation of solid material, the multi-step adding method and the continuously adding method is preferable.

The aromatic vinyl compound is preferably selected from the group consisting α -methyl styrene, o -ethyl styrene, p -ethyl styrene, and vinyl toluene

The vinyl cyanide compound is preferably selected from the group consisting of acrylonitrile, methacrylonitrile, and ethacrylonitrile.

The emulsifier used in polymerization reaction is alkyl aryl sulfonate, alkali methyl alkyl sulfate, sulfonated alkyl ester, soap of fatty acid, alkali salt of rosinate etc., it may be used alone or as a mixture of more than two kinds.

The molecular weight controlling agent is preferably tertiary dodecylmercaptan.

The polymerization initiator can use an oxidation-reduction catalyst system prepared by a mixture of peroxide such as cumenhydroperoxide, diisopropylbenzenehydroperoxide, persulfate etc., and reductant such as sodium formaldehyde sulfoxylate, sodium ethylenediamine tetra-acetate, ferrous sulfate, dextrose, sodium pyrrolinate, sodium sulfite etc.

After polymerization is complete, the polymerization conversion ratio of the obtained latex is over 96%. An antioxidant and a stabile agent is added to the latex, and a powder is obtained by solidifying with the aqueous solution of sulfuric acid at temperature of over 80 °C, and then dehydrating and drying.

The stability of the graft copolymer latex is considered by measuring the solid type solidification part (%) as described in Equation 1 below.

[Equation 1]

Solid type solidification part (%) = (weight of formed solid material in reactor (g) / weight of total rubber and monomer) x 100

When the solid type solidification part is over 0.7%, the stability of the latex is deteriorates. In addition, obtaining a suitable graft polymer in the present invention is difficult due to the many amounts of solid material.

In addition, the graft ratio of the graft polymer is measured as follows. The graft polymer latex is obtained in a powder form by solidifying, washing, and drying. And then, 2g of the powder is stirred for 24 hrs with the addition of 300 ml of acetone. The solution separates by using ultra-centrifuge, and the un-grafted part is obtained by dropping separated acetone solution to methanol, and the weight of the un-grafted part is measured by drying. The graft ratio is measured according to Equation 2 below using the measurement value.

[Equation 2]

Graft ratio (%) = (weight of grafted monomer / weight of rubber property) x 100

Wherein, if the graft ration is below 25 %, the present invention is not suitable due to a reduction of thermal stability.

(Preparation of heat-resistant copolymer)

The heat-resistant copolymer is prepared by controlling a suitable ratio α-methylstyrene and acrylonitrile compound by using mass polymerization.

As an example of the preparation, 50 to 80 wt parts of α -methylstyrene monomer, 20 to 50 wt parts of acrylonitrile, 26 to 30 wt parts of toluene as solvent, 0.1 to 0.5 wt parts of di-tert-dodecylmercaptan as the molecular weight controlling agent is mixed by adding in a reactor, wherein an amount of adding of the components controls so as to become 2 to 4 hrs of average reaction time of the mixture solution, and the mixture solution polymerizes under condition maintaining at 140 to 170 °C. This preparation process is performed in a continuous process consisting of pump adding raw material, continuous agitation bath, pre-heat bath, and evaporation bath, polymer carrying pump and extrusion processing instrument.

The distribution of the molecular chain structure of the obtained α-methylstyrene(AMS) and acrylonitrile(AN) copolymer is analyzed by using $^{13}$C NMR analyzer. The analysis method is that the obtained pellet dissolves in deuterium chloroform, and the resultant is measured by using tetramethylsilane as the inner standard material. In the peak of measured 140~150 ppm, the peak of the chain structure of alphamethylstyrene-acrylonitrile-acrylonitrile(AMS-AN-AN) shows in 141~144 ppm of the scope, the peak the chain structure of alphamethyl styrene- alphamethylstyrene-acrylonitrile (AMS-AMS-AN) shows in 144.5~147 ppm of the scope, the peak the chain structure of alphamethylstyrene-alphamethylstyrene-alphamethylstyrene (AMS-AMS-AMS) shows in 147.5~150 ppm of the scope, and then the obtained copolymer is analyzed by measuring the area of the peaks.

If the chain structure of alphamethylstyrene-alphamethylstyrene-alphamethylstyrene (AMS-AMS-AMS) among the molecular chain structure of the heat-resistant copolymer per 100% of the total amount is over 15%, thermal stability reduces due to the pyrolysis of the chain structure of alphamethylstyrene-alphamethylstyrene-alphamethylstyrene (AMS-AMS-AMS) when processing. If the chain structure of alphamethylstyrene-alphamethylstyrene-alphamethylstyrene (AMS-AMS-AMS) is over 40%, the heat-resistant property is poor. Thus, the molecular structure of the heat-resistant copolymer preferably comprises less than 15% of the chain structures of alphamethylstyrene-alphamethylstyrene-alphamethylstyrene (AMS-AMS-AMS), and comprises less than 40% of the chain structures of alphamethylstyrene-acrylonitrile-acrylonitrile (AMS-AN-AN).

(Mixing process)

The heat-resistant thermoplastic rein having an excellent thermal stability is prepared by adding the additive of lubricant, antioxidant, and light stabilizer etc. in the graft ABS polymer prepared by emulsion polymerization and the heat-resistant copolymer prepared by mass polymerization, and then by mixing.

The mixing ratio of the graft ABS polymer and heat-resistant copolymer is preferably 20 : 80 ~ 80 : 20.

The resin is prepared in pellet form by using a double screw extrusion mixer at 230 to 250 °C, and then the property of the pellet is measured by injecting the pellet.

The property is measured by the ASTM method, wherein the thermal stability of heat-resistant thermoplastic resin investigates the color of the specimen before retention and the color deviation of specimen after retention where the pellet prepared by the mixing process is injected through retention for 15 min. at 250 °C by using the injection instrument. As the color deviation is minimal, the thermal stability of the thermoplastic resin is superior.

Hereinafter, the present invention is described in more detail through the following EXAMPLES and COMPARATIVE EXAMPLES. However, the following EXAMPLES are only for the understanding of the present invention, and the present invention is not limited to the following EXAMPLES.

**EXAMPLES**

EXAMPLE1

a) Preparation of the graft ABS polymer

(Preparation of the rubber latex having a small diameter)

100 wt parts of ion exchange water, 100 wt parts of 1,3-butadiene as a monomer, 1.2 wt parts of potassium rosinate as an emulsifier, 1.5 wt parts of potassium oleate, 0.1 wt parts of $Na_2CO_3$ as an electrolyte, 0.5 wt parts of $KHCO_3$, and 0.3 wt parts of tert-dodecyl mercaptan (TDDM) as a molecular weight controlling agent was placed together in a lump and placed in a nitrogen-substituted polymerization reactor (autoclave). The reaction temperature was raised to 55 °C, and then the reaction was initialized by adding in a lump 0.3 wt parts of potassium sulfite as an initiator in the reactor, and reacted for 10 hrs. Thereafter, 0.3 wt parts of tert-dodecyl mercaptan (TDDM) was further added to the reactant, and then the reaction was completed by reacting for 8 hrs at 65 °C to obtain the rubber latex. The obtained rubber latex was analyzed.

The analysis of the rubber latex was determined by the gel content, the swelling index, and the particle diameter.

The gel content and swelling index was determined as follows.

The rubber latex was solidified with dilution acid or metal salt, and the solidification was washed and dried in a vacuum oven for 24 hrs at 60 °C. The obtained rubber mass was cut into small pieces with scissors, and 1 g of the rubber slice was added to 100g of toluene, and then was stored in a dark room at room temperature for 48 hrs. The resultant was separated to sol and gel, and then the gel content and swelling index of each was measured according to Equations 3 and 4 below.

[Equation 3]

Gel content (%) = (weight of insoluble part (gel) / weight of sample) ×

100

[Equation 4]

Swelling index = weight of swelled gel / weight of the gel

The particle diameter was measured by the dynamic laser-light scattering method using Nicornp (Model: 370HPL).

Wherein, the particle diameter of the obtained rubber latex was 1000 Å, the gel content was 90 %, and swelling index was 18.

(Preparation of the rubber latex having a large diameter - welding process of the rubber latex having a small diameter)

100 wt parts of the prepared rubber latex having a small diameter was added in the reactor, the stirring speed was controlled to 10 rpm, and the temperature was controlled to 30 °C, and then 3.0 wt parts of aqueous solution 7 wt% of acetic acid was slowly added in the reactor for 1 hr. Thereafter, the agitation was stopped, and the conjugated diene latex having a large diameter was prepared through welding of the rubber latex having a small diameter by leaving the resultant for 30 min. The rubber latex having a large diameter was analyzed by the same method measuring the rubber latex having a small diameter.

The particle diameter of the rubber latex having a large diameter was 3100 Å, the gel content was 90 %, and the swelling index was 17.

(Grafting process)

50 wt parts of the rubber latex having a large diameter prepared by the welding process, 65 wt parts of ion exchange water, 0.35 wt parts of potassium rosinate as an emulsifier, 0.1 wt parts of sodium ethylene diamine tetraacetate, 0.005 wt parts of ferrous sulfate, and 0.23 wt parts of formaldehyde sodium sulfoxylatet was placed together in a lump and placed in a nitrogen-substituted polymerization reactor, and the temperature was raised to 70 °C. The mixture emulsion solution of 50 wt parts of ion exchange water, 0.65 wt parts of potassium rosinate, 35 wt parts of styrene, 15 wt parts of acrylonitrile, 0.4 wt parts of tert-dodecylmercaptan, 0.4 wt parts of diisopropylenehydroperoxide was continuously added to the reactant for 3 hrs, and the temperature was raised to 80 °C, and then the reaction was completed by aging for 1hr.

Wherein, the polymerization conversion ratio was 97.5 %, the solid type solidification part was 0.2 %, and the graft ratio was 37 %. This latex was solidified with aqueous solution of sulfuric acid and by washing, and the powder was obtained.

b) Preparation of heat-resistant copolymer

The raw material mixing of 30 wt parts of toluene as solvent and 0.15 wt parts of di-tert-dodecylmercaptan as the molecular weight controlling agent in 70 wt parts of $\alpha$-methyl styrene, and 30 wt parts of acrylonitrile was maintained at 148 °C of the reaction temperature by continuously adding in the reactor so as to become 3 hrs of the average reaction time. The discharged polymerization solution in the reactor was heated in a preheater, the un-reacted monomer was volatilized in evaporation reactor, and then the temperature of the polymer was maintained at 210 °C. Thereafter, the copolymer resin was processed in a pellet form by using a transfer pump extrusion molding.

The obtained heat-resistant copolymer was analyzed with the molecular chain structure with $^{13}$C NMR analyzer. As a result, the chain structure of AMS-AMS-AMS was 3%, the chain structure of AMS-AN-AN was 20%.

c) Mixing process

0.5 wt parts of lubricant and 0.3 wt parts of antioxidant, and 0.1 wt parts of light stabilizer was added and mixed in 40 wt parts of ABS polymer prepared by the emulsion polymerization and 60 wt parts of the heat-resistant copolymer prepared by mass polymerization. And, then the pellet was prepared by using a double screw extruder at 240 °C, and the property was measured by injecting the pellet again, and the result was shown in Table 1.

Example 2

a) Preparation of graft ABS polymer

The graft ABS polymer was prepared by the same method as Example 1 except that the content of the components was changed in a grafting process, as 60 wt parts of the rubber latex having a large diameter, 28 wt parts of styrene, 12 wt parts of acrylonirtile. The graft ratio was 30%, and the content of the solid type solidification part was 0.3%.

b) Preparation of heat-resistant copolymer

The heat-resistant copolymer was prepared by the same method as Example 1.
The obtained heat-resistant copolymer was analyzed with the molecular chain structure with $^{13}$C NMR analyzer. As a result, the chain structure of AMS-AMS-AMS was 4%, the chain structure of AMS-AN-AN was 22%.

c) Mixing process

The heat-resistant thermoplastic resin was prepared by the same mixing process as Example 1, except that the graft ABS polymer and heat-resistant copolymer was used in the ratio (the additive was the same) as shown in Table 1 below.
The property of the prepared heat-resistant thermoplastic resin is shown in Table 1 below.

Example 3

a) Preparation of graft ABS polymer

The graft ABS polymer was prepared by the same method as Example 1, except that the content of the components was changed in grafting process, as 45 wt parts of the rubber latex having a large diameter, 38 wt parts of styrene, 17 wt parts of acrylonirtile. The graft ratio was 45%, and the content of the solid type solidification part was 0.1 %.

b) Preparation of heat-resistant copolymer

The heat-resistant copolymer was prepared by the same method as in Example 1.
The obtained heat-resistant copolymer was analyzed with the molecular chain structure with $^{13}$C NMR analyzer. As a result, the chain structure of AMS-AMS-AMS was 5%, the chain structure of AMS-AN-AN was 19%.

c) Mixing process

The heat-resistant thermoplastic resin was prepared by the same mixing process as Example 1, except that the graft ABS polymer and heat-resistant copolymer was used in the ratio (the additive was the same) as shown in Table 1 below.
The property of the prepared heat-resistant thermoplastic resin is shown in Table 1 below.

Example 4

a) Preparation of graft ABS polymer

The rubber latex having a small diameter (95% of gel content) was prepared by the same method as Example 1, except that 99 wt parts of 1,3-butadiene, and 1 wt parts of styrene instead of 100 wt parts of 1,3-butadiene as monomer was changed, and the rubber latex having a large diameter was prepared, and then the graft ABS polymer was prepared through the grafting process.

b) Preparation of heat-resistant copolymer

The heat-resistant copolymer was prepared by the same method as in Example 1.
The obtained heat-resistant copolymer was analyzed with the molecular chain structure with $^{13}$C NMR analyzer.

As a result, the chain structure of AMS-AMS-AMS was 3%, the chain structure of AMS-AN-AN was 21 %.

c) Mixing process

The heat-resistant thermoplastic resin was prepared by the same mixing process as Example 1, except that the graft ABS polymer and heat-resistant copolymer was used in the ratio (the additive was the same) as shown in Table 1 below.

The property of the prepared heat-resistant thermoplastic resin is shown in Table 1 below.

Example 5

a) Preparation of the graft ABS polymer

The rubber latex having a small diameter was prepared by the same method as Example 1, and then, except that in preparation of the rubber latex having a large diameter, the content of acetic acid for welding the rubber latex having a small diameter was changed to 20 wt parts. The particle diameter of the rubber latex having a large diameter was 2200 Å.

The graft ABS polymer was prepared through grafting process by the same method as in Example 1, except the rubber latex having a large diameter.

b) Preparation of heat-resistant copolymer

The heat-resistant copolymer was prepared by the same method as in Example 1.

The obtained heat-resistant copolymer was analyzed with the molecular chain structure with $^{13}$C NMR analyzer. As a result, the chain structure of AMS-AMS-AMS was 4%, the chain structure of AMS-AN-AN was 20%.

c) Mixing process

The heat-resistant thermoplastic resin was prepared by the same mixing process as Example 1, except that the graft ABS polymer and heat-resistant copolymer was used in the ratio (the additive was the same) as shown in Table 1 below.

The property of the prepared heat-resistant thermoplastic resin is shown in Table 1 below.

Example 6

a) Preparation of the graft ABS polymer

The rubber latex having a small diameter (65% of the gel content) was prepared by the same method as Example 1, except that each polymerization temperature was lowered by 3 °C in the process of rubber latex having a small diameter. The rubber latex having a large diameter was prepared, and the graft ABS polymer was prepared through the grafting process by the same method as Example 1.

b) Preparation of heat-resistant copolymer

The heat-resistant copolymer was prepared by the same method as in Example 1.

The obtained heat-resistant copolymer was analyzed with the molecular chain structure with $^{13}$C NMR analyzer. As a result, the chain structure of AMS-AMS-AMS was 5%, the chain structure of AMS-AN-AN was 22%.

c) Mixing process

The heat-resistant thermoplastic resin was prepared by the same mixing process as Example 1, except that the graft ABS polymer and heat-resistant copolymer was used in the ratio (the additive was the same) as shown in Table 1 below.

The property of the prepared heat-resistant thermoplastic resin is shown in Table 1 below.

Comparative example 1

a) Preparation of graft ABS polymer

The graft ABS polymer was prepared through a grafting process by the same method as Example 1, except that 71 wt parts of the rubber latex having a large latex and 20 wt parts of styrene, and 9 wt parts of acrylonitrile was changed in the grafting process. The grafting ratio was 20%, the content of the solid type solidification was 0.4%.

b) Preparation of heat-resistant copolymer

The heat-resistant copolymer was prepared by the same method as Example 1.
The obtained heat-resistant copolymer was analyzed with the molecular chain structure with $^{13}$C NMR analyzer. As a result, the chain structure of AMS-AMS-AMS was 5%, the chain structure of AMS-AN-AN was 23%.

c) Mixing process

The heat-resistant thermoplastic resin was prepared by the same mixing process as Example 1, except that the graft ABS polymer and heat-resistant copolymer was used in the ratio (the additive was the same) as shown in Table 1 below.
The property of the prepared heat-resistant thermoplastic resin is shown in Table 1 below.

Comparative Example 2

a) Preparation of the graft ABS polymer

The graft ABS polymer was prepared by the same method as in Example 1.

b) Preparation of heat-resistant copolymer

The heat-resistant copolymer was prepared by the same method as in Example 1, except that 55 wt parts of $\alpha$-methyl styrene and 45 wt parts of acrylonitrile, instead of 70 wt parts of $\alpha$-methyl styrene and 30 wt parts of acrylonitrile, was used.
The obtained heat-resistant copolymer was analyzed with the molecular chain structure with $^{13}$C NMR analyzer. As a result, the chain structure of AMS-AMS-AMS was 1%, the chain structure of AMS-AN-AN was 45%.

c) Mixing process

The heat-resistant thermoplastic resin was prepared by the same mixing process as the Example 1, except that the graft ABS polymer and heat-resistant copolymer was used in the ratio (the additive was the same) as shown in Table 1 below.
The property of the prepared heat-resistant thermoplastic resin is shown in Table 1 below.

Comparative example 3

a) Preparation of the graft ABS polymer

The graft ABS polymer was prepared by the same method as in Example 1.

b) Preparation of heat-resistant copolymer

The heat-resistant copolymer was prepared by the same method as in Example 1, except that 85 wt parts of $\alpha$-methyl styrene and 15 wt parts of acrylonitrile, instead of 70 wt parts of $\alpha$-methyl styrene and 30 wt parts of acrylonitrile was used.
The obtained heat-resistant copolymer was analyzed with the molecular chain structure with $^{13}$C analyzer. As a result, the chain structure of AMS-AMS-AMS was 19%, the chain structure of AMS-AN-AN was 8%.

c) Mixing process

The heat-resistant thermoplastic resin was prepared by the same mixing process as Example 1, except that the graft ABS polymer and heat-resistant copolymer was used in the ratio (the additive was the same) as shown in Table 1 below.

The property of the prepared heat-resistant thermoplastic resin is shown in Table 1 below.

Comparative example 4

a) Preparation of the graft ABS polymer

The graft ABS polymer was prepared by the same method as in Example 1.

b) Preparation of heat-resistant copolymer

The heat resistant copolymer was prepared by the heat resistant copolymer (PW600A, products of LG. CHEMICAL CO. LTD) prepared by emulsion polymerization, instead of the heat resistant copolymer prepared by mass polymerization.

The heat-resistant copolymer prepared by emulsion polymerization was analyzed with the molecular chain structure with $^{13}$C NMR analyzer, the chain structure of AMS-AMS-AMS was 8%, the chain structure of AMS-AN-AN was 30%.

c) Mixing process

The heat-resistant thermoplastic resin was prepared by the same mixing process as Example 1, except that the graft ABS polymer and heat-resistant copolymer was used in the ratio (the additive was the same) as shown in Table 1 below.

The property of the prepared heat-resistant thermoplastic resin is shown in Table 1 below.

Table 1

| | Example | | | | Expl. | Expl. | Comp. Expl. | Comp. Expl. | Comp. Expl. | Comp. Expl. |
|---|---|---|---|---|---|---|---|---|---|---|
| | 1 | 2 | 3 | 4 | 5 | 6 | 1 | 2 | 3 | 4 |
| Graft ABS polymer (Wt parts) | 40 | 38 | 39 | 40 | 40 | 38 | 39 | 40 | 38 | 39 |
| Heat resistant copolymer (Wt parts) | 60 | 62 | 61 | 60 | 60 | 62 | 61 | 60 | 62 | 61 |
| Notch izod impact strength (ASTM D-256) | 45 | 41 | 42 | 46 | 18 | 36 | 37 | 48 | 35 | 26 |
| Flow index (ASTM D-1238) | 6 | 7 | 7 | 6 | 6 | 7 | 6 | 6 | 7 | 4 |
| Heat deflection temperature (°C) (ASTM D-648) | 105 | 106 | 105 | 104 | 106 | 106 | 106 | 100 | 108 | 106 |

(continued)

| | Example | | | | Expl. | Expl. | Comp. Expl. | Comp. Expl. | Comp. Expl. | Comp. Expl. |
|---|---|---|---|---|---|---|---|---|---|---|
| | 1 | 2 | 3 | 4 | 5 | 6 | 1 | 2 | 3 | 4 |
| Thermal stability (ΔE) | good 2.7 | good 3.4 | good 3.1 | good 2.9 | good 2.9 | ordinary 3.8 | ordinary 3.9 | good 1.8 | bad 7.2 | ordinary 3.9 |

The heat-resistant thermoplastic resin composition prepared by the method according to the present invention has an especially excellent thermal stability, as well as having an excellent heat-resistance, impact resistance, and processability.

**Claims**

1. A method for preparing a heat-resistant thermoplastic resin composition having an excellent heat stability comprising the steps of:

   a) preparing a graft ABS polymer through emulsion polymerization by combining:

   i) 40 to 70 wt parts of conjugated diene rubber latex;
   ii) 15 to 40 wt parts of aromatic vinyl compound; and
   iii) 5 to 20 wt parts of vinyl cyanide;

   b) preparing a copolymer having heat-resistance by continuously adding:

   i) 50 to 80 wt parts of $\alpha$-methylstyrene; and
   ii) 20 to 50 wt parts of acrylonitrile;
   iii) 26 to 30 wt parts of solvent; and
   iv) 0.1 to 0.5 wt parts of the molecular weight controlling agent in a polymerization reactor,

   c) mixing the graft ABS polymer and the copolymer having heat-resistance;

   **characterized in that** step b) is carried out that:

   d) the molecular structure of the heat-resistant copolymer of step b) comprises less than 15% alphamethyl styrene-alphamethyl styrene-alphamethylstyrene (AMS-AMS-AMS) chains, and less than 40% alphamethyl styreneacrylonitrile-acrytonitrile (AMS-AN-AN) chains; and
   e) the copolymer is prepared by mass polymerization at a polymerisation temperature of 140 to 170°C for 2 to 4 hours.

2. The method according to claim 1, wherein the conjugated diene rubber latex of step a)i) has an average particle size of 2500- 5000Å, a gel content of 70- 95 %, and a swelling index of 12- 30.

3. The method according to claim 1 or 2, wherein the graft ABS polymer of step a) has a graft rate of over 26%.

4. The method according to any preceding claim, wherein the conjugated diene rubber latex of step a)i) is an aliphatic conjugated diene compound mixture, or a mixture of an aliphatic conjugated diene compound and an ethylene-based unsaturated monomer.

5. The method according to any preceding claim, wherein the aromatic vinyl compound of step a)ii) is selected from the group consisting of styrene, $\alpha$ -methyl styrene, o -ethyl styrene, p -ethyl styrene, and vinyl toluene.

6. The method according to any preceding claim, wherein the vinyl cyanide of step a)iii) is selected from the group consisting of acrylonitrile, methacrylonitrile, and ethacrylonitrile.

7. The method according to any preceding claim, wherein the mixing ratio of step c) is 20 to 80 wt parts of graft ABS polymer and 80 to 20 wt parts of copolymer having heat-resistance.

8. The method according to any preceding claim, wherein the mixing of step c) further comprises an additive selected from the group consisting of lubricant, oxidation inhibitor, light stabilizer.

9. The method according to claim 1, wherein the graft ABS polymer of step a) is prepared by placing together in a lump:

    i) 40 to 70 wt parts of conjugated diene rubber latex;
    ii) 15 to 40 wt part of aromatic vinyl compound;
    iii) 5 to 20 wt part of vinyl cyanide compound;
    iv) 0.2 to 0.6 wt parts of emulsifier;
    v) 0.2 to 0.6 wt parts of the molecular weight controlling agent; and
    vi) 0.1 to 0.5 wt parts of the polymerization initiator in a polymerization reactor; and

graft copolymerizing at a polymerization temperature of 45 to 80 °C for 3 to 5 hours.

10. The method according to claim 9, wherein the emulsifier is at least one selected from the group consisting of alkyl aryl sulfonate, alkali metal alkyl sulfate, sulfonated alkyl ester, soap of fatty acid, and alkali salts of rosinate.

11. The method according to any one of claims 9 or 10, wherein the polymerization initiator is at least one selected from the group consisting of cumene hydroperoxide, diisopropyl benzene hydroperoxide, persulfate, sodium formaldehyde sulfoxylate, sodium ethylene diamine tetraacetate, ferrous sulfate, dextrose, sodium pyrrolinate, sodium sulfite.

**Patentansprüche**

1. Verfahren zum Herstellen einer wärmebeständigen thermoplastischen Harzzusammensetzung mit einer ausgezeichneten Wärmestabilität, das die folgenden Schritte umfasst:

    a) Herstellen eines ABS-Pfropfpolymers durch Emulsionspolymerisation durch Kombinieren von folgendem:

        i) 40 bis 70 Gewichtsteile eines konjugierten Dienkautschuk-Latex;
        ii) 15 bis 40 Gewichtsteile einer aromatischen Vinylverbindung; und
        iii) 5 bis 20 Gewichtsteile eines Vinylcyanids;

    b) Herstellen eines Copolymers, das Wärmebeständigkeit aufweist, durch kontinuierliches Zufügen von:

        i) 50 bis 80 Gewichtsteilen von $\alpha$-Methylstyrol;
        ii) 20 bis 50 Gewichtsteilen Acrylnitril;
        iii) 26 bis 30 Gewichtsteilen eines Lösungsmittels; und
        iv) 0,1 bis 0,5 Gewichtsteilen eines Mittels zum Steuern des Molekulargewichts in einen Polymerisationsreaktor;

    c) Vermischen des ABS-Pfropfpolymers und des Copolymers, das Wärmebeständigkeit aufweist;

    **dadurch gekennzeichnet, dass** Schritt b) dadurch ausgeführt wird, dass:

    d) die Molekularstruktur des wärmebeständigen Copolymers von Schritt b) weniger als 15% $\alpha$-Methylstyrol-$\alpha$-Methylstyrol-$\alpha$-Methylstyrol (AMS-AMS-AMS)-Ketten und weniger als 40% $\alpha$-Methylstyrol-Acrylnitril-Acrylnitril (AMS-AN-AN)-Ketten aufweist; und
    e) das Copolymer durch Massenpolymerisation bei einer Polymerisationstemperatur von 140 bis 170°C für 2 bis 4 Stunden hergestellt wird.

2. Verfahren nach Anspruch 1, wobei der konjugierte Dienkautschuk-Latex von Schritt a)i) eine durchschnittliche Teilchengröße von 2500-5000 Å, einen Gelanteil von 70-95% und eine Schwellzahl von 12 bis 30 aufweist.

3. Verfahren nach Anspruch 1 oder 2, wobei das ABS-Pfropfpolymer von Schritt a) einen Pfropfanteil von über 26% aufweist.

**4.** Verfahren nach einem der vorangehenden Ansprüche, wobei der konjugierte Dienkautschuk-Latex von Schritt a)i) eine Mischung aus aliphatischen konjugierten Dienverbindungen oder eine Mischung aus einer aliphatischen konjugierten Dienverbindung und einem Ethylen-basierten ungesättigten Monomer ist.

**5.** Verfahren nach einem der vorangehende Ansprüche, wobei die aromatische Vinylverbindung von Schritt a)ii) ausgewählt wird aus der Gruppe bestehend aus Styrol, $\alpha$-Mehtylstyrol, o-Ethylstyrol, p-Ethylstyrol und Vinyltoluol.

**6.** Verfahren nach einem der vorangehenden Ansprüche, wobei das Vinylcyanid von Schritt a)iii) ausgewählt wird aus der Gruppe bestehend aus Acrylnitril, Methacrylnitril und Ethacrylnitril.

**7.** Verfahren nach einem der vorangehenden Ansprüche, wobei das Mischungsverhältnis von Schritt c) bei 20 bis 80 Gewichtsteilen des ABS-Pfropfpolymers und 80 bis 20 Gewichtsteilen des Copolymers mit Wärmebeständigkeit liegt.

**8.** Verfahren nach einem der vorangehenden Ansprüche, wobei das Mischen von Schritt c) ferner einen Zusatzstoff umfasst, der ausgewählt ist aus der Gruppe bestehend aus Schmiermittel, Oxidationsinhibitor, Lichtstabilisator.

**9.** Verfahren nach Anspruch 1, wobei das ABS-Pfropfpolymer von Schritt a) hergestellt wird durch Zusammenbringen in einer Masse von:

> i) 40 bis 70 Gewichtsteilen des konjugierten Dienkautschuk-Latex;
> ii) 15 bis 40 Gewichtsteilen der aromatischen Vinylverbindung;
> iii) 5 bis 20 Gewichtsteilen der Vinylcyanidverbindung;
> iv) 0,2 bis 0,6 Gewichtsteilen eines Emulgators;
> v) 0,2 bis 0,6 Gewichtsteilen des Mittels zum Steuern des Molekulargewichts; und
> vi) 0,1 bis 0,5 Gewichtsteilen des Polymerisationsinitiators in einem Polymerisationsreaktors; und

> Pfropfpolymerisieren bei einer Polymerisationstemperatur von 45 bis 80°C für 3 bis 5 Stunden.

**10.** Verfahren nach Anspruch 9, wobei der Emulgator zumindest einer ist, der ausgewählt ist aus der Gruppe bestehend aus Alkylarylsulfonat, Alkalimetallalkylsulfat, sulfoniertem Alkylester, Seife von Fettsäure und Alkalisalzen von Rosinat.

**11.** Verfahren nach einem der Ansprüche 9 oder 10, wobei der Polymerisationsinitiator zumindest einer ist, der ausgewählt ist aus der Gruppe bestehend aus Cumolhydroperoxid, Diisopropylbenzolhydroperoxid, Persulfat, Natriumformaldehydsulfoxylat, Natriumethylendiamintetraacetat, Eisen(II)-sulfat, Dextrose, Natriumpyrrolinat, Natriumsulfit.

**Revendications**

**1.** Une méthode pour préparer une composition de résine thermoplastique résistant à la chaleur ayant une excellente stabilité à la chaleur comprenant les étapes de :

> a) la préparation d'un polymère ABS greffé par polymérisation d'émulsion en combinant :

>> i) 40 à 70 parties en poids de latex de caoutchouc diénique conjugué ;
>> ii) 15 à 40 parties en poids de composé de vinyle aromatique ; et
>> iii) 5 à 20 parties en poids de cyanure de vinyle ;

> b) la préparation d'un copolymère résistant à la chaleur en ajoutant en continu :

>> i) 50 à 80 parties en poids de a-méthylstyrène ; et
>> ii) 20 à 50 parties en poids d'acrylonitrile ;
>> iii) 26 à 30 parties en poids de solvant ; et
>> iv) 0,1 à 0,5 partie en poids de l'agent de régulation du poids moléculaire dans un réacteur de polymérisation ;

> c) le mélange du polymère ABS greffé et du copolymère résistant à la chaleur ;

> **caractérisé en ce que** l'étape b) est effectuée de sorte que :

d) la structure moléculaire du copolymère résistant à la chaleur de l'étape b) comprend moins de 15% de chaînes d'alphaméthylstyrène-alphaméthylstyrène-alphaméthylstyrène (AMS-AMS-AMS) et moins de 40% de chaînes d'alphaméthylstyrène-acrylonitrile-acrylonitrile (AMS-AN-AN) ; et

e) le copolymère est préparé par polymérisation en masse à une température de polymérisation de 140 à 170 °C pendant 2 à 4 heures.

2. La méthode selon la revendication 1, où le latex de caoutchouc diénique conjugué de l'étape a) i) a une taille de particule moyenne de 2500~5000 Å, une teneur en gel de 70~95 % et un indice de gonflement de 12~30.

3. La méthode selon la revendication 1 ou 2, où le polymère ABS greffé de l'étape a) a un taux de greffage de plus de 26 %.

4. La méthode selon l'une quelconque des revendications précédentes, où le latex de caoutchouc diénique conjugué de l'étape a) i) est un mélange de composé diénique conjugué aliphatique ou un mélange d'un composé diénique conjugué aliphatique et d'un monomère non saturé à base d'éthylène.

5. La méthode selon l'une quelconque des revendications précédentes, où le composé de vinyle aromatique de l'étape a) ii) est sélectionné dans le groupe constitué de styrène, de α-méthylstyrène, de o-éthylstyrène, de ρ-éthylstyrène et de vinyl toluène.

6. La méthode selon l'une quelconque des revendications précédentes, où le cyanure de vinyle de l'étape a) iii) est sélectionné dans le groupe constitué d'acrylonitrile, de méthacrylonitrile et d'éthacrylonitrile.

7. La méthode selon l'une quelconque des revendications précédentes, où le rapport de mélange de l'étape c) est de 20 à 80 parties en poids de polymère ABS greffé et de 80 à 20 parties en poids de copolymère résistant à la chaleur.

8. La méthode selon l'une quelconque des revendications précédentes, où le mélange de l'étape c) comprend en plus un additif sélectionné dans le groupe constitué de lubrifiant, d'inhibiteur d'oxydation, de stabilisant de lumière.

9. La méthode selon la revendication 1, où le polymère ABS greffé de l'étape a) est préparé en plaçant ensemble dans une masse :

i) 40 à 70 parties en poids de latex de caoutchouc diénique conjugué ;
ii) 15 à 40 parties en poids de composé de vinyle aromatique ;
iii) 5 à 20 parties en poids de composé de cyanure de vinyle ;
iv) 0,2 à 0,6 partie en poids d'émulsifiant ;
v) 0,2 à 0,6 partie en poids de l'agent de régulation du poids moléculaire ; et
vi) 0,1 à 0,5 partie en poids d'un amorceur de polymérisation dans un réacteur de polymérisation ; et

en copolymérisant le greffe à une température de polymérisation de 45 à 80 °C pendant 3 à 5 heures.

10. La méthode selon la revendication 9, où l'émulsifiant est au moins un sélectionné dans le groupe constitué d'alkyl aryl sulfonate, de sulfate d'alkyle de métal alcalin, d'ester d'alkyl sulfoné, de savon d'acide gras et de sels alcalins de rosinate.

11. La méthode selon l'une quelconque des revendications 9 ou 10, où l'amorceur de polymérisation est au moins un sélectionné dans le groupe constitué d'hydroperoxyde de cumène, d'hydroperoxyde de diisopropylbenzène, de persulfate, de formaldéhyde-sulfoxylate de sodium, d'éthylène diamine-tétra-acétique de sodium, de sulfate ferreux, de dextrose, de pyrroline de sodium, de sulfite de sodium.

**EP 1 265 961 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3010936 A
- US 4659790 A
- JP 58206657 A
- JP 63162708 A
- JP 63235350 A
- US 4757109 A
- EP 0255889 A2